# EUROPÄISCHE PATENTSCHRIFT

(11) **EP 2 857 669 B1**
(45) Veröffentlichungstag und Bekanntmachung des Hinweises auf die Patenterteilung: **06.12.2017**
(21) Anmeldenummer: 14186665.7
(22) Anmeldetag: 26.09.2014
(51) Int. Cl.: F02M 37/22, B01D 35/00, B01D 35/18, B01D 35/30

(54) **Filtereinrichtung für ein Kraftfahrzeug**
Filter device for a motor vehicle
Dispositif de filtre pour véhicule automobile

(30) Priorität: 04.10.2013 DE 102013220153
(43) Veröffentlichungstag der Anmeldung: 08.04.2015
(73) Patentinhaber: Mahle International GmbH, 70376 Stuttgart (DE)
(72) Erfinder: HOFFMANN, Dierk, 71229 Leonberg (DE)
(74) Vertreter: BRP Renaud & Partner mbB Rechtsanwälte Patentanwälte Steuerberater

(56) Entgegenhaltungen:
- EP-A2- 1 068 948
- EP-A2- 2 060 773
- WO-A1-03/076792
- WO-A1-2012/135440
- DE-A1-102007 005 771
- US-A- 3 235 084
- US-A- 4 501 255

## Beschreibung

Die vorliegende Erfindung betrifft eine Filtereinrichtung für ein Kraftfahrzeug sowie ein Kraftfahrzeug mit einer solchen Filtereinrichtung.

Filtereinrichtungen in der Form von Kraftstofffiltern dienen zur Reinigung von Kraftstoff von störenden Feststoffpartikeln. Ein solcher Filterungsvorgang erfolgt meist innerhalb einer Kraftstoffleitung, durch welche Kraftstoff in eine Brennkammer einer Brennkraftmaschine eingeleitet wird. Als Filtermaterial sind papierähnliche Materialien gebräuchlich, welche in einem Gehäuse der Filtereinrichtung montiert und zu Austauschzwecken auch wieder aus diesem entnommen werden können. Neben solchen sog. Austauschfiltern bietet sich auch der Gebrauch sog. nur einmalig verwendbarer "Wegwerf'-Filter an, welche nach Gebrauch entsorgt werden. Als Gehäusematerial für das Filtergehäuse eignet sich aufgrund seines geringen Eigengewichts und seiner vorteilhaften industriellen Herstellbarkeit Kunststoff. Herkömmliche Filtergehäuse aus Kunststoff werden dabei etwa mittels gängiger Spritzguss- oder Formpressverfahren hergestellt. Als geeignete Materialien kommen zum Beispiel Polyethylen (PE), Polytetrafluorethylen (PTFE), PA6 oder PA 66 in Betracht.

Als problematisch bei solchen Filtereinrichtungen erweist sich indes die mangelnde elektrische Leitfähigkeit solcher, aus elektrisch isolierendem Kunststoff hergestellter Filtergehäuse. Denn der das Filtergehäuse zu Filterungszwecken durchströmende Kraftstoff bewirkt regelmäßig eine reibungselektrisch bedingte elektrostatische Aufladung des elektrisch isolierenden Filtergehäuses sowie dessen Kraftstoffleitungen, die wiederum Ursache eines unerwünschten, hohen elektrischen Spannungspuls im Filtergehäuse sein kann. Ein solcher elektrischer Spannungspuls vermag jedoch das Kunststoffgehäuse der Filtereinrichtung in nicht unerheblichem Maße zu schädigen.
In der EP 0545 924 B1 ist eine Filtereinrichtung beschrieben, in deren Filtergehäuse aus Kunststoff elektrisch leitende Fasern eingebettet sind, die die Ausbildung elektrostatischer Ladungsträgeransammlungen an der Innenwand des Gehäuses verhindern sollen. Hierzu werden die elektrisch leitenden Fasern von der Gehäuseinnenwand nach außen geführt und zur elektrischen Erdung in geeigneter Weise mit einem elektrischen Massepotential verbunden. Hierfür in Betracht kommen beispielsweise Teile der Fahrzeugkarosserie des Fahrzeugs, in welchem die besagte Filtereinrichtung verbaut ist. Insofern erfordert die Filtereinrichtung zur Erdung der leitenden Fasern allerdings einen technisch aufwändigen, elektrisch leitenden Gehäusehalter, über welchen das Filtergehäuse an der Karosserie befestigt werden kann.
Die DE 10 2011 018 233 beschreibt demgegenüber ein Kraftstofffilter mit einem lösbar am Filtergehäuse des Kraftstofffilters befestigbaren Heizmodul zur Erwärmung des zu filternden Kraftstoffs.

WO 03/076792 A1 beschreibt ein Kraftstofffilter mit einer Heizeinrichtung, wobei Ladungsträger über ein am Filtergehäuse angeordnetes Anschlusselement elektrisch abgeleitet werden.

Es ist eine Aufgabe der vorliegenden Erfindung, eine Filtereinrichtung anzugeben, welche kostengünstig herzustellen ist und bei welcher die Gefahr einer Beschädigung oder gar irreversiblen Zerstörung des Filtergehäuses durch elektrostatische Aufladung weitgehend unterbunden werden kann.
Die genannte Aufgabe wird erfindungsgemäß durch den Gegenstand der unabhängigen Patentansprüche gelöst. Bevorzugte Ausführungsformen sind Gegenstand der abhängigen Ansprüche.

Die Erfindung beruht auf dem allgemeinen Gedanken, sowohl das Filtergehäuse der Filtereinrichtung als auch das Heizergehäuse einer an besagtem Filtergehäuse befestigten Heizeinrichtung mit einem Gehäusematerial aus einem elektrisch leitenden Kunststoff auszubilden und auf diese Weise die Heizeinrichtung zur elektrischen Erdung des Filtergehäuses zu nutzen. Die elektrische Ableitung von sich im Gehäuse ansammelnden elektrischen Ladungsträgern wird auf diese Weise maßgeblich vereinfacht. Gerade eine technisch aufwändige Befestigung des Filtergehäuses an der Fahrzeugkarosserie unter Verwendung eines elektrisch leitenden Befestigungsbauteils kann bei der erfindungsgemäßen Lösung entfallen; vielmehr erfolgt gemäß der hier vorgestellten Filtereinrichtung die zur Ladungsträgerabführung unabdingbare Erdung des Filtergehäuses in indirekter Weise über das - ebenfalls aus einem elektrisch leitenden Kunststoff hergestellte - Heizergehäuse der Heizeinrichtung, welches wiederum mit einem elektrischen Anschlusselement zum Versorgen eines im Heizergehäuse angebrachten elektrischen Heizelements mit elektrischer Energie aus dem Bordnetz des Kraftfahrzeugs verbunden ist. Die elektrische Erdung erfolgt erfindungsgemäß also über die mit dem elektrischen Bordnetz des Kraftfahrzeugs verbundene Heizeinrichtung. Eine konstruktiv aufwändige, separate elektrische Kontaktierung des Filtergehäuses mit einer separaten Erdungsleitung oder mit Hilfe des eingangs beschrieben elektrisch leitenden Befestigungsbauteils ist folglich nicht mehr erforderlich.

Vorliegend wird das Gehäusematerial des Filtergehäuses ohne Beschränkung der Allgemeinheit als erstes Gehäusematerial und entsprechend das Gehäusematerial des Heizergehäuses als zweites Gehäusematerial bezeichnet, womit zum Ausdruck gebracht werden soll, dass im Filtergehäuse und im Heizergehäuse verschiedene Materialsysteme aus elektrisch leitendem Kunststoff verwendet werden können. Dies schließt den Spezialfall, dass im Filtergehäuse und im Heizergehäuse ein identisches Materialsystem verwendet wird, ausdrücklich mit ein.

Vorzugsweise sind unter dem Begriff "elektrisch leitender Kunststoff' im weitesten Wortsinn einerseits alle Kunststoffmaterialien erfasst, denen durch geeignete konstruktive Modifikation elektrisch leitende Eigenschaften verliehen werden können. Dies kann beispielsweise durch Einbetten elektrisch leitender Materialien in den als Trägermaterial wirkenden Kunststoff erfolgen. So bietet es sich etwa an, bei der Herstellung des Filtergehäuses elektrisch leitende Materialien, etwa in Form von Fäden aus rostfreiem Stahl, in den an sich elektrisch isolierenden Kunststoff einzubringen. Anderseits umfasst der Begriff "elektrisch leitender Kunststoff' aber auch intrinsisch leitende Polymermaterialien wie beispielsweise Polypyrrole oder Polythiophene, in welchen Defektelektronen als elektrische Ladungsträger zur Verfügung gestellt werden. In diesem Zusammenhang versteht sich, dass das Gehäuse nicht vollständig elektrisch leitend ausgebildet sein muss; insofern ist es im erfindungsgemäßen Sinne völlig ausreichend, eine Innenwand des Filtergehäuses mit besagtem elektrisch leitenden Kunststoff zu versehen, welcher wiederum mit dem ebenfalls elektrisch leitenden Kunststoff des Heizergehäuses verbunden werden muss.

Aus fertigungstechnischer Sicht besonders zweckmäßig und hinsichtlich der erwünschten Erdungseigenschaften der Filtereinrichtung bereits völlig ausreichend ist es, nur eine Innenumfangswand des Filtergehäuses mit einem elektrisch leitenden Kunststoff zu versehen. Demnach bietet es sich an, die Gehäusewand radial nach außen in ein erstes Gehäusematerial aus einem elektrisch isolierenden Kunststoff übergehen zu lassen.

Als in besonderem Maße elegant erweist sich indes eine mittels eines Bajonett- oder Schraubverschlusses lösbare Verbindung des Heizergehäuses mit dem Filtergehäuse, wobei im aneinander befestigten Zustand eine elektrische Verbindung zwischen dem Heizergehäuses und dem Filtergehäuse hergestellt wird.

Hierzu ist es notwendig, die dem einschlägigen Fachmann bekannten Bauteile des Bajonett- bzw. Schraubverschlusses an geeigneten Stellen oder gar vollständig mit dem ersten und/oder zweiten Gehäusematerial aus elektrisch leitendem Kunststoff auszustatten. In diesem Szenario ist die zur Erdung des Filtergehäuses erforderliche elektrische Verbindung zwischen den beiden Gehäuse-Bauteilen ohne zusätzlichen Verdrahtungsaufwand realisierbar. Für den versierten Fachmann kommen selbstverständlich auch andere geeignete Befestigungstechniken - zu denken ist beispielsweise an einen herkömmlichen Bügelverschluss oder eine Schraubverbindung - in Betracht. Zur Optimierung der Erdung des Filtergehäuses über das Heizergehäuse bietet es sich generell an, eine sowohl elektrische als auch mechanische Verbindung mit einer möglichst großen Kontaktfläche zwischen filter- und heizerseitigem Verbindungselement vorzusehen, was beispielsweise durch besagten Bajonettverschluss, aber auch durch eine Schraubverbindung gewährleistet ist.

Das elektrische Anschlusselement besitzt vorzugsweise ein ausreichend dimensioniertes Steckergehäuse mit wenigstens zwei, vorzugsweise metallischen, Kontaktstiften zum Anschließen des Heizelements an eine externe Energieversorgungseinheit oder - alternativ dazu - an das elektrische Bordnetz eines Kraftfahrzeugs. Es bietet sich dabei an, das Anschlusselement konstruktiv in das Heizergehäuse zu integrieren, so dass sich die Heizeinrichtung als Einheit am Filtergehäuse befestigen lässt. Das Anschlusselement einschließlich des Steckergehäuses kann als dem einschlägigen Fachmann bekannter männlicher oder weiblicher Teil einer Steckverbindung sein, welche die zum Betrieb des Heizelements erforderliche Anzahl von elektrischen Kontaktstiften bzw. Kontaktöffnungen enthält. Typischerweise werden über das Anschlusselement in bekannter Weise über wenigstens zwei Kontaktstifte bzw. Kontaktöffnungen wenigstens zwei elektrische Versorgungsleitungen vom Heizelement nach außen geführt, wobei eine der beiden Leitungen eine elektrische Masseleitung ist. Alternativ oder zusätzlich bietet es sich an, das Steckergehäuse des Anschlusselements selbst mit dem elektrischen Massepotential der externen Energieversorgungseinheit bzw. des elektrischen Bordnetzes zu verbinden. Gemäß einer besonders bevorzugten Ausgestaltungsvariante kann das Steckergehäuse einen elektrisch nicht-leitenden Kunststoff umfassen; auf diese Weise können unerwünschte elektrische Kriechströme zwischen den einzelnen Kontaktstiften besonders gut unterdrückt werden.

Besonders kostengünstig herzustellen ist eine bevorzugte Ausführungsform, bei welcher das Steckergehäuse des Heizergehäuses ein Gehäusematerial aus einem elektrisch nicht leitenden Kunststoff umfasst.

Auch für die konstruktive Ausgestaltung der Filtereinrichtung selbst bieten sich dem Fachmann verschiedene Optionen an. Als in besonderem Maße zweckmäßig erweist es sich, die Filtereinrichtung in bekannter Art und Weise als Ringfilter mit einem im Wesentlichen zylindrischen Filtergehäuse auszubilden.

Gemäß einer vorteilhaften Weiterbildung kann der Bajonett- oder Schraubverschluss nun auf einer Stirnseite des zylindrischen Filtergehäuses vorgesehen sein. Dies ermöglicht einem Werker einen komfortablen Zugang zur Filtereinrichtung - gerade wenn diese in einem Kraftfahrzeug mit hoher Komponentendichte verbaut werden soll -, beispielsweise um die Heizeinrichtung zu Reparatur- oder Wartungszwecken vom Filtergehäuse zu lösen oder das Filterelement bzw. die gesamte Filtereinrichtung auszutauschen.

Die Erfindung betrifft ferner ein Kraftfahrzeug mit einer Brennkraftmaschine sowie mit einer mit der Brennkraftmaschine zusammenwirkenden Filtereinrichtung mit einem oder mehreren der vorangehend genannten Merkmale.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: ein Beispiel einer erfindungsgemäßen Filtereinrichtung in einer perspektivischen Darstellung,
- Fig. 2: die Filtereinrichtung der Figur 1 in einem Längsschnitt.

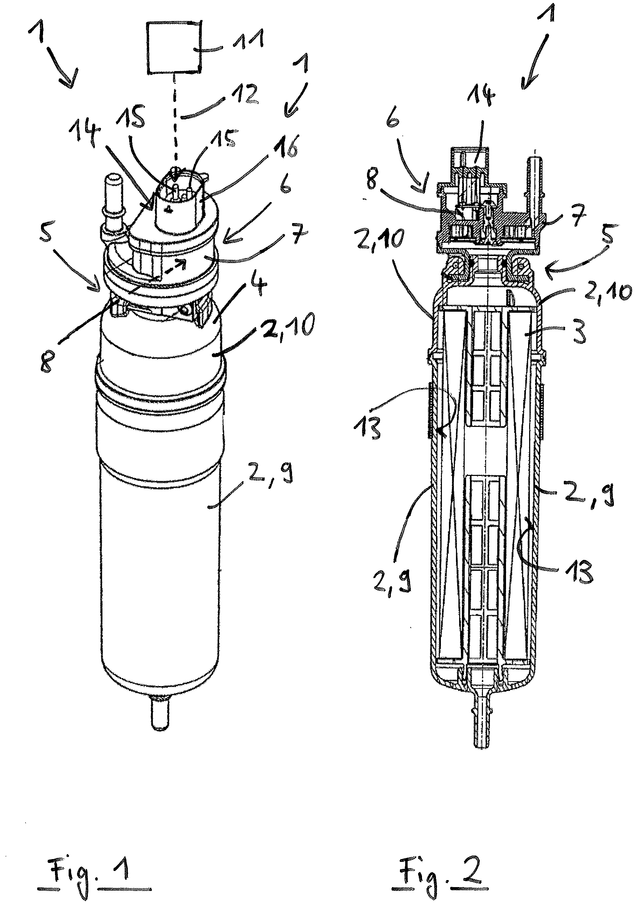

Die Figur 1 zeigt eine mit 1 bezeichnete Filtereinrichtung in einer perspektivischen Darstellung. Im Beispiel der Figur 1 ist die Filtereinrichtung in bekannter Art und Weise in Form eines Ringfilters ausgebildet. Selbstverständlich ist die hier vorgestellte Filtereinrichtung 1 jedoch nicht nur auf solche, dem Fachmann bekannte Ringfilter beschränkt; vielmehr werden im Folgenden grundsätzlich jegliche Einrichtungen als Filtereinrichtung im erfindungsgemäßen Sinne erachtet, die das Separieren von Schmutzpartikeln aus einem Fluid erlauben.

Die Filtereinrichtung 1 besitzt ein zur Aufnahme eines - im Längsschnitt der Figur 2 erkennbaren und mit dem Bezugszeichen 3 bezeichneten - Filterelements ein hinreichend groß dimensioniertes Filtergehäuse 2 in der geometrischen Gestalt eines Zylinders. Das Filtergehäuse 2 umfasst in bekannter Weise einen Filtergehäusetopf 9, welcher durch einen aufschraubbaren oder aufgeschweißten Gehäusedeckel 10 zum Filtergehäuse 2 komplettiert wird. Auf einer vom Filtergehäusetopf 9 abgewandten Stirnseite 4 des Gehäusedeckels 10 ist ein Bajonettverschluss 5 angebracht, welcher eine Heizeinrichtung 6 mit einem Heizergehäuse 6, am Filtergehäuse 2 befestigt. Selbstverständlich erlauben einfache bauliche Veränderungen am Filtergehäuse 2 und am Heizergehäuse 7 dem einschlägigen Fachmann die Realisierung anderer Verschlussarten - alternativ zum in Figur 1 gezeigten Bajonettverschluss -, beispielsweise in der Art eines Schraub- oder Bügelverschlusses.

Die Heizeinrichtung 6 dient zum bedarfsweisen Beheizen der Filtereinrichtung 1, beispielsweise wenn die Viskosität des die Filtereinrichtung 1 durchströmenden Kraftstoffs bei niedrigen Umgebungstemperaturen erhöht werden soll. Hierzu besitzt die Heizeinrichtung 7 ein elektrisches Heizelement 8, beispielsweise in der Art einer herkömmlichen elektrischen Heizspule o.ä., welche nicht Gegenstand der Erfindung ist und somit an dieser Stelle nicht weiter erläutert werden soll. Die zum Betrieb des Heizelements 8 erforderliche Energie kann durch eine externe Energieversorgungseinheit oder ein elektrisches Bordnetz - beide sind in der Figur 1 nur grobschematisch angedeutet und mit dem Bezugszeichen 11 bezeichnet - des Kraftfahrzeugs, in welchem die Filtereinrichtung 1 zum Einsatz kommt, zur Verfügung gestellt werden. Die hierzu erforderliche elektrische Verbindung zwischen Filtereinrichtung 1 und Bordnetz 11 ist durch eine geeignete, im Szenario der Figur 1 ebenfalls nur grobschematisch skizzierte elektrische Versorgungsleitung 12 realisiert. In das Heizergehäuse 7 ist ein elektrisches Anschlusselement 14 integriert, an welche die elektrische Versorgungsleitung 12 angeschlossen werden kann. Das Anschlusselement 14 ist im Beispiel der Figur 11 als männlicher Teil einer Steckverbindung mit der Versorgungsleitung 12 ausgebildet. Die einzelnen, in der Figur 1 nicht gezeigten elektrischen Leitungspfade innerhalb der Heizeinrichtung 6, werden etwa über metallische Kontaktstifte 15 des Anschlusselements 14 nach außen geführt. Zur elektrischen Erdung des Heizergehäuses 7 ist selbiges entweder mit dem Steckergehäuse 16 des Anschlusselements 14 oder mit einem der Kontaktstifte 15 kontaktiert, welcher über die elektrische Versorgungsleitung 12 mit dem elektrischen Massepotential des Bordnetzes bzw. der Energieversorgungseinheit 11 verbunden wird. Besonders kostengünstig herzustellen ist eine Variante der Filtereinrichtung, bei welcher das Steckergehäuse 16 des Heizergehäuses 7 ein Gehäusematerial aus einem elektrisch nicht leitenden Kunststoff umfasst.

Das Gehäuse 2 der Filtereinrichtung 1 weist nun ebenso wie jenes der Heizeinrichtung 6 ein Gehäusematerial aus einem elektrisch leitenden Kunststoff auf. Die im Gehäuse 2 sowie im Heizergehäuse 6 verwendeten Gehäusematerialien aus leitendem Kunststoff können identisch oder voneinander verschieden sein. Dabei sind unter dem Begriff "elektrisch leitender Kunststoff' im weitesten Wortsinn alle Kunststoffmaterialien, beispielsweise Polyamid, erfasst, denen durch geeignete konstruktive Modifikation elektrisch leitende Eigenschaften verliehen werden. Dies kann wie eingangs beschrieben durch Einbetten elektrisch leitender Materialien in den dann als Trägermaterial wirkenden Kunststoff erreicht werden. So bietet es sich etwa an, in den an sich elektrisch isolierenden Kunststoff elektrisch leitende Fasern, beispielsweise in Form von Fäden aus rostfreiem Stahl, Graphitfasern, ein Metallpulver, metallisierte Glaskugeln, Leitruß, Kohlefasern, aber auch Graphitfibrillen in den per se elektrisch isolierenden Kunststoff einzubringen. Für die hier vorgestellte Filtereinrichtung 1 geeignet erweisen sich auch intrinsisch leitende Kunststoffpolymere wie zum Beispiel Polypyrrol oder Polythiophen, in welchen sog. Defektelektronen als elektrische Ladungsträger zur Verfügung stehen.

Die Grundidee der hier anhand eines Beispiels erläuterten Erfindung beruht darauf, den elektrisch leitenden Kunststoff dazu zu nutzen, die sich - bedingt durch elektrostatische Reibung - im Filtergehäuse 2 ansammelnden Ladungsträger über das jeweils elektrisch leitende Kunststoffmaterial von Filtergehäuse 2 über das Heizergehäuse 7 und von diesem über das Anschlusselement 14 von der Filtereinrichtung 1 abzuleiten. Besagte Ladungsträgerabführung erfolgt somit über eine elektrische Erdung des Filtergehäuses 2 über das mit diesem elektrisch verbundene Heizergehäuse 7 am elektrischen Bordnetz bzw. an der der externen elektrischen Energieversorgungseinheit 11. Eine separate und somit konstruktiv aufwändige elektrische Erdung des Filtergehäuses 2, beispielsweise mit Hilfe einer separaten Erdungsleitung oder mit Hilfe eines elektrisch leitenden Befestigungsbauteils, entfällt somit. Ein weiterer Vorteil der erfindungsgemäßen, gezielten Ladungsträgerabführung besteht darin, dass das Auftreten von unerwünschten elektrischen Feldern bzw. Spannungen an weiteren Bauteilen des die Filtereinrichtung verwendenden Kraftfahrzeugs, z.B. an Karosserieteilen o.ä., welche durch stationäre - also nicht-abgeführte - Ladungsträger hervorgerufen werden, vermieden werden kann.

Das Gehäusematerial des Filtergehäuses 2 und das Gehäusematerial des Heizergehäuses 7 können beide auf einem identischen Materialsystem oder auf verschiedenen Materialsystemen - in beiden Fällen aus einem leitenden Kunststoff - basieren. Es versteht sich dabei, dass nicht alle Bauteile des Filtergehäuses 2 und des Heizergehäuses 7 aus einem elektrisch leitenden Kunststoff hergestellt sein müssen. Die erfindungsgemäße Filtereinrichtung 1 bedingt zwingend lediglich eine elektrische Verbindung einer Innenwand 13 des Filtergehäuses 2 mit dem Heizergehäuse 7, welches wiederum eine elektrische Verbindung mit dem Anschlusselement 14 aufweist. Die Verwendung eines elektrisch leitenden Kunststoffs im Material des oben beschriebenen Bajonettverschlusses 5 verbessert jedoch die elektrische Verbindung zwischen Filtergehäuse 2 und Heizergehäuse 7 in nicht unerheblichem Maße.

## Patentansprüche

1. Filtereinrichtung (1) für ein Kraftfahrzeug,
- mit einem Filtergehäuse (2), welches wenigstens teilweise ein erstes Gehäusematerial aus einem elektrisch leitenden Kunststoff umfasst,
- mit einer am Filtergehäuse (2) lösbar befestigbaren oder befestigten Heizeinrichtung (6),
- wobei die Heizeinrichtung (6) ein Heizergehäuse (7) umfasst, welches wenigstens teilweise aus einem zweiten Gehäusematerial aus einem elektrisch leitenden Kunststoff gebildet ist und in einem am Filtergehäuse (2) befestigten Zustand elektrisch leitend mit diesem verbunden ist,
- wobei die Heizeinrichtung (6) ein elektrisches Heizelement (8) mit einem elektrischen Anschlusselement (14) aufweist, welches mittels einer externen elektrischen Versorgungsleitung (12) zum Versorgen mit elektrischer Energie mit einer externen Energieversorgungseinheit oder einem elektrischen Bordnetz (11) eines Kraftfahrzeugs verbindbar ist,
- wobei das elektrische Anschlusselement (14) zum Ableiten von sich am Filtergehäuse (2) und/oder am Heizergehäuse (7) ansammelnden elektrischen Ladungsträgern elektrisch mit dem Filtergehäuse (2) und dem Heizergehäuse (7) verbunden ist.

2. Filtereinrichtung nach Anspruch 1,
**dadurch gekennzeichnet, dass**
das erste und/oder zweite Gehäusematerial ein elektrisch leitendes Polymermaterial umfasst.

3. Filtereinrichtung nach Anspruch 1 oder 2,
**dadurch gekennzeichnet, dass**
das erste und/oder zweite Gehäusematerial elektrisch leitende Fasern aufweist.

4. Filtereinrichtung nach einem der Ansprüche 1 bis 3,
**dadurch gekennzeichnet, dass**
das erste Gehäusematerial eine Innenwand (13) des Filtergehäuses (2) ausbildet.

5. Filtereinrichtung nach einem der vorhergehenden Ansprüche,
**dadurch gekennzeichnet, dass**
das Heizergehäuse (7) mittels eines Bajonett- oder Schraubverschluss (5) lösbar und elektrisch leitend mit dem Filtergehäuse (2) verbindbar ist.

6. Filtereinrichtung nach einem der vorhergehenden Ansprüche,
**dadurch gekennzeichnet, dass**
das elektrische Anschlusselement (14) ein in das Heizergehäuse (6) integriertes Steckergehäuse (16) mit Kontaktstiften (15) zum Anschließen des Heizelements (8) an eine externe Energieversorgungseinheit oder ein elektrisches Bordnetz (11) umfasst.

7. Filtereinrichtung nach Anspruch 6,
**dadurch gekennzeichnet, dass**
das Steckergehäuse (16) des Heizergehäuses (6) ein Gehäusematerial aus einem elektrisch nicht leitenden Kunststoff umfasst.

8. Filtereinrichtung nach einem der vorhergehenden Ansprüche,
**dadurch gekennzeichnet, dass**
die Filtereinrichtung (1) als Ringfilter mit einem im Wesentlichen zylindrischen Filtergehäuse ausgebildet ist, in welchem ein Ringfilterelement angeordnet ist.

9. Filtereinrichtung nach einem der Ansprüche 5 bis 8,
**dadurch gekennzeichnet, dass**
der Bajonett- oder Schraubverschluss (5) auf einer Stirnseite (4) des zylindrischen Filtergehäuses (2) vorgesehen ist.

10. Kraftfahrzeug,
- mit einer Brennkraftmaschine,
- mit einer mit der Brennkraftmaschine zusammenwirkenden Filtereinrichtung (1) nach einem der vorhergehenden Ansprüche.

## Claims

1. Filter device (1) for a motor vehicle
- having a filter housing (2) which comprises at least partially a first housing material comprising an electrically conductive plastics material,
- having a heating device (6) which can be or is releasably secured to the filter housing (2),
- wherein the heating device (6) comprises a heater housing (7) which is formed at least partially from a second housing material of an electrically conductive plastics material and which in a state secured to the filter housing (2) is connected thereto in an electrically conductive manner,
- wherein the heating device (6) has an electrical heating element (8) having an electrical connection element (14) which by means of an external electrical supply line (12) for supplying with electrical energy can be connected to an external energy supply unit or an electrical on-board network (11) of a motor vehicle,
- wherein the electrical connection element (14) for discharging electrical charge carriers which are accumulated on the filter housing (2) and/or on the heater housing (7) is electrically connected to the filter housing (2) and the heater housing (7).

2. Filter device according to claim 1,
**characterised in that**
the first and/or second housing material comprises an electrically conductive polymer material.

3. Filter device according to claim 1 or 2,
**characterised in that**
the first and/or second housing material has electrically conductive fibres.

4. Filter device according to any one of claims 1 to 3,
**characterised in that**
the first housing material forms an inner wall (13) of the filter housing (2).

5. Filter device according to any one of the preceding claims,
**characterised in that**
the heater housing (7) can be connected to the filter housing (2) by means of a bayonet or screw closure (5) in a releasable and electrically conductive manner.

6. Filter device according to any one of the preceding claims,
**characterised in that**
the electrical connection element (14) comprises a connector housing (16) which is integrated in the heater housing (6) and which has contact pins (15) for connecting the heating element (8) to an external energy supply unit or an electrical on-board network (11).

7. Filter device according to claim 6,
**characterised in that**
the connector housing (16) of the heater housing (6) comprises a housing material of an electrically non-conductive plastics material.

8. Filter device according to any one of the preceding claims,
**characterised in that**
the filter device (1) is constructed as a ring filter with a substantially cylindrical filter housing in which a ring filter element is arranged.

9. Filter device according to any one of claims 5 to 8,
**characterised in that**
the bayonet or screw closure (5) is provided at an end face (4) of the cylindrical filter housing (2).

10. Motor vehicle
- having an internal combustion engine,
- having a filter device (1) which cooperates with the internal combustion engine according to any one of the preceding claims.

## Revendications

1. Dispositif de filtre (1) pour un véhicule automobile,
- avec un boîtier de filtre (2), qui comprend au moins en partie un premier matériau de boîtier composé d'une matière plastique électroconductrice,
- avec un dispositif de chauffage (6) pouvant être fixé ou fixé de manière amovible au niveau du boîtier de filtre (2),
- dans lequel le dispositif de chauffage (6) comprend un boîtier de radiateur (7), qui est formé au moins en partie à partir d'un deuxième matériau de boîtier composé d'une matière plastique électroconductrice et qui est relié au boîtier de filtre (2) de manière électroconductrice dans un état fixé avec ce dernier,
- dans lequel le dispositif de chauffage (6) présente un élément de chauffage (8) électrique avec un élément de raccordement (14) électrique, qui peut être relié à une unité d'alimentation en énergie externe ou à un réseau de bord (11) électrique d'un véhicule automobile aux fins de l'alimentation en énergie électrique au moyen d'une ligne d'alimentation (12) électrique externe,
- dans lequel l'élément de raccordement (14) électrique est relié de manière électrique au boîtier de filtre (2) et au boîtier de radiateur (7) afin de dévier des porteurs de charge électriques s'accumulant au niveau du boîtier de filtre (2) et/ou au niveau du boîtier de radiateur (7).

2. Dispositif de filtre selon la revendication 1,
**caractérisé en ce que**
le premier et/ou le deuxième matériau de boîtier comprend un matériau polymère électroconducteur.

3. Dispositif de filtre selon la revendication 1 ou 2,
**caractérisé en ce que**
le premier et/ou le deuxième matériau de boîtier présente des fibres électroconductrices.

4. Dispositif de filtre selon l'une quelconque des revendications 1 à 3,
**caractérisé en ce que**
le premier matériau de boîtier réalise une paroi intérieure (13) du boîtier de filtre (2).

5. Dispositif de filtre selon l'une quelconque des revendications précédentes,
**caractérisé en ce que**
le boîtier de radiateur (7) peut être relié de manière amovible et de manière électroconductrice au boîtier de filtre (2) au moyen d'un bouchon à baïonnette ou à vis (5).

6. Dispositif de filtre selon l'une quelconque des revendications précédentes,
**caractérisé en ce que**
l'élément de raccordement (14) électrique comprend un boîtier à fiches (16) intégré dans le boîtier de radiateur (6), pourvu de tiges de contact (15) servant à raccorder l'élément de chauffage (8) à une unité d'alimentation en énergie externe ou à un réseau de bord (11) électrique.

7. Dispositif de filtre selon la revendication 6,
**caractérisé en ce que**
le boîtier à fiches (16) du boîtier de radiateur (6) comprend un matériau de boîtier composé d'une matière plastique non électroconductrice.

8. Dispositif de filtre selon l'une quelconque des revendications précédentes,
**caractérisé en ce que**
le dispositif de filtre (1) est réalisé sous la forme d'un filtre annulaire avec un boîtier de filtre sensiblement cylindrique, dans lequel est disposé un élément de filtre annulaire.

9. Dispositif de filtre selon l'une quelconque des revendications 5 à 8,
**caractérisé en ce que**
le bouchon à baïonnette ou à vis (5) est prévu sur un côté frontal (4) du boîtier de filtre (2) cylindrique.

10. Véhicule automobile,
- avec un moteur à combustion interne
- avec un dispositif de filtre (1) selon l'une quelconque des revendications précédentes coopérant avec le moteur à combustion interne.
